(19) Europäisches Patentamt
European Patent Office
Office européen des brevets

(11) **EP 2 426 761 A2**

(12) **EUROPEAN PATENT APPLICATION**

(43) Date of publication:
**07.03.2012 Bulletin 2012/10**

(51) Int Cl.:
*H01M 4/62* (2006.01)     *H01M 4/485* (2010.01)
*H01M 4/131* (2010.01)    *H01M 4/1391* (2010.01)

(21) Application number: **11179737.9**

(22) Date of filing: **01.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.09.2010 JP 2010195288**
**24.02.2011 JP 2011037922**
**30.05.2011 JP 2011120139**

(71) Applicant: **Sanyo Electric Co., Ltd.**
**Osaka 570-8677 (JP)**

(72) Inventors:
• **OGATA, Atsushi**
  **Moriguchi-shi, Osaka 5708677 (JP)**
• **OGASAWARA, Takeshi**
  **Moriguchi-shi, Osaka 5708677 (JP)**

(74) Representative: **Glawe, Delfs, Moll**
**Patent- und Rechtsanwälte**
**Postfach 26 01 62**
**80058 München (DE)**

(54) **Positive electrode for non-aqueous electrolyte secondary battery, battery using the same, and method of manufacturing positive electrode for non-aqueous electrolyte secondary battery**

(57)     A positive electrode (1) has a positive electrode current collector, and a positive electrode mixture layer formed on at least one surface of the positive electrode current collector. The positive electrode mixture layer contains a positive electrode active material, a water-based binder, and a conductive agent. The positive electrode active material includes a lithium-transition metal composite oxide having an erbium compound adhered to a surface of the lithium-transition metal composite oxide, and the water-based binder includes a latex rubber.

FIG. 2

**Description**

BACKGROUND OF THE INVENTION

Field of the Invention

The present invention relates to a positive electrode for a non-aqueous electrolyte secondary battery, a battery using the positive electrode, and a method of manufacturing the positive electrode for a non-aqueous electrolyte secondary battery.

Description of Related Art

Mobile information terminal devices such as mobile telephones, notebook computers, and PDAs have become smaller and lighter at a rapid pace in recent years. This has led to a demand for higher capacity batteries as the drive power source for the mobile information terminal devices. Conventionally, the efforts to improve the capacity of the batteries have centered around thickness reduction of the components that are not directly involved in charge and discharge, such as battery can, separator, and current collector (aluminum foil or copper foil), as well as increasing of the filling density of active material (i.e., improvement in electrode filling density). However, when the electrode filling density is increased, the flexibility of the electrode decreases. As a consequence, the electrode can form fractures easily even with a small stress, so productivity of the battery may suffer. Moreover, it is necessary that the thickness of the positive electrode mixture slurry applied should be sufficiently large, in order to obtain high capacity and cost advantage by reducing the thickness of the components such as separator and current collector that are not directly involved in charge and discharge. However, when the slurry is applied in a large thickness and then rolled, the electrode plate becomes very stiff, lacking flexibility. This leads to such a problem that the positive electrode breaks during the winding of the electrode assembly and consequently the productivity of the battery considerably deteriorates.

In order to resolve the just-described problem, it has been proposed to use two kinds of positive electrode active materials having different average particle sizes (see Japanese Published Unexamined Patent Application Nos. 2006-185887 and 2008-235157). However, when the positive electrode contains positive electrode active materials having different particle sizes, the charge-discharge reactions in the electrode plate do not take place uniformly because each of the active materials has a different reactivity. Consequently, the decomposition reaction of the electrolyte solution tends to occur easily. Thus, a problem with the just-described proposals has been that, although the just-described proposals can achieve some flexibility of the electrode, various characteristics of the battery deteriorate.

Although not aiming at improving the flexibility, there has been another proposal that aims at, for example, improving dispersibility of the conductive agent by synthesizing a positive electrode active material (lithium iron phosphate) without providing a drying step during the process of preparing the coating solution (see Japanese Published Unexamined Patent Application No. 2009-81072). However, the battery fabricated according to the just-mentioned proposal cannot inhibit the reactivity between the positive electrode active material and the electrolyte solution, resulting in poor storage performance.

BRIEF SUMMARY OF THE INVENTION

In view of the foregoing and other problems, it is an object of the present invention to provide a. positive electrode for a non-aqueous electrolyte secondary battery that can improve productivity by increasing flexibility of the positive electrode and improve the battery performance such as the storage performance in a charged state and the cycle performance (particularly the cycle performance at high-rate discharge). It is another object of the invention to provide a battery using the positive electrode, and a method of manufacturing the positive electrode for a non-aqueous electrolyte secondary battery.

In order to accomplish the foregoing and other objects, the present invention provides a positive electrode for a non-aqueous electrolyte secondary battery comprising: a positive electrode current collector; a positive electrode mixture layer formed on at least one surface of the positive electrode current collector, the positive electrode mixture layer containing a positive electrode active material, a water-based binder, and a conductive agent; the positive electrode active material comprising a lithium-transition metal composite oxide having at least one metallic compound selected from the group consisting of an aluminum compound, a zinc compound, a zirconium compound, a magnesium compound, and a rare earth compound, the at least one metallic compound adhered to a surface of the lithium-transition metal composite oxide; and the water-based binder comprising a latex rubber.

Thus, the present invention provides the advantageous effects of improving productivity of a battery by increasing flexibility of the positive electrode, and improving the battery performance such as the storage performance in a charged state and the cycle performance (particularly the cycle performance at high-rate discharge).

BRIEF DESCRIPTION OF THE DRAWINGS

Fig. 1 is a front view illustrating a battery fabricated according to an embodiment of the invention;
Fig. 2 is a cross-sectional view taken along line A-A in Fig. 1;
Fig. 3 is a graph showing the relationship between the load and the displacement when a pressure is applied to a positive electrode;
Fig. 4 is a schematic cross-sectional view for illustrating a test for evaluating the flexibility of the positive electrode;
Fig. 5 is a schematic cross-sectional view for illustrating a test for evaluating the flexibility of the positive electrode; and
Fig. 6 is a SEM photograph illustrating the surface of the positive electrode active material used for a battery A1 of the invention.

DETAILED DESCRIPTION OF THE INVENTION

According to the present invention, a positive electrode for a non-aqueous electrolyte secondary battery comprises: a positive electrode current collector; a positive electrode mixture layer formed on at least one surface of the positive electrode current collector, the positive electrode mixture layer containing a positive electrode active material, a water-based binder, and a conductive agent; the positive electrode active material comprising a lithium-transition metal composite oxide having at least one metallic compound selected from the group consisting of an aluminum compound, a zinc compound, a zirconium compound, a magnesium compound, and a rare earth compound, the at least one metallic compound adhered to a surface of the lithium-transition metal composite oxide; and the water-based binder comprising a latex rubber.

When the metallic compound is adhered to the surface of the lithium-transition metal composite oxide, the irregularity in the surface of the positive electrode active material is greater than when metallic compound is not adhered to the surface. Therefore, the dispersibility of the latex rubber is improved significantly, and the network of the latex rubber, which shows excellent binding capability, is uniformly formed in the positive electrode active material layer. Accordingly, the flexibility of the positive electrode is improved. As a result, productivity of the battery is dramatically improved because the positive electrode is prevented from breaking during winding the electrode assembly.

Moreover, the surface of the lithium-transition metal composite oxide can be inhibited from being exposed because the dispersibility of the latex rubber is improved (i.e., the latex rubber is dispersed uniformly over the surface of the lithium-transition metal composite oxide), so the decomposition reaction of the electrolyte solution at the positive electrode surface can be inhibited. As a result, the storage performance in a charged state under a high-temperature atmosphere and the cycle performance (particularly the cycle performance at high-rate discharge) is improved significantly. One reason for the significant improvement in the cycle performance is that the decomposition of the electrolyte solution is inhibited. Another reason is that the improvement in the flexibility of the positive electrode serves to maintain the binding performance between the positive electrode mixture layer and the positive electrode current collector even when the charge-discharge cycle is repeated (i.e., when the positive electrode active material undergoes expansion and shrinkage repeatedly).

Herein, the term "latex rubber" means a rubber that can be dispersed in water, and it does not include water-soluble binder agents, such as CMC (carboxymethylcellulose).

It is desirable that the latex rubber contain a fluorine-containing resin. It is also desirable that the fluorine-containing resin be PTFE.

The reason is that the flexibility of the positive electrode is improved further when the latex rubber contains a fluorine-containing resin such as PTFE.

It is desirable that the at least one metallic compound be a rare earth compound. It is desirable that the rare earth compound be at least one compound selected from the group consisting of an yttrium compound, a lanthanum compound, a neodymium compound, a samarium compound, an erbium compound, and an ytterbium compound.

The use of such a compound makes it possible to improve the flexibility of the positive electrode further and to improve the cycle performance more.

It is desirable that the at least one metallic compound selected from the group consisting of an aluminum compound, a zinc compound, a zirconium compound, a magnesium compound, and a rare earth compound be at least one substance selected from the group consisting of a hydroxide, an oxyhydroxide, an acetate compound, a nitrate compound, and a sulfate compound. Especially desirable is a hydroxide.

When a solution containing an acetate compound, a nitrate compound, or a sulfate compound dissolved in water is used for the metallic compound and the lithium transition metal oxide is mixed with the solution, the acetate compound or the like changes into a hydroxide because the lithium transition metal oxide is alkaline. Therefore, the metallic compound exists in the form of a hydroxide in many cases, and that is why the hydroxide is desirable. The reason why the acetate compound, the nitrate compound, or the sulfate compound is desirable is that these compounds may remain on the surface of the lithium transition metal oxide without undergoing reactions. In addition, the reason why the acetate compound, the nitrate compound, or the sulfate compound is used for producing the metallic compound is that these compounds can be dissolved in water easily. Furthermore, an oxyhydroxide is desirable because, after preparing the positive electrode, the positive electrode may be subjected to a heat treatment (for example, a heat treatment at a temperature of from 230°C to 300°C), and in that case, a hydroxide changes into an oxyhydroxide.

It is desirable that the metallic compound existing on the surface of the lithium-transition metal composite oxide have an average particle size of from 1 nm to 100 nm.

If the average particle size of the metallic compound is less than 1 nm, the irregularity in the surface of the positive electrode active material may be so small that the effect of improving the dispersibility of the latex rubber may not be fully exhibited. On the other hand, if the average particle size of the metallic compound exceeds 100 nm, the amount of the metallic compound per unit area adhering to the surface will be so small that the effect of improving the dispersibility of the latex rubber may not be fully exhibited. Moreover, the area of the lithium transition metal oxide exposed will be so large that the effect of inhibiting the decomposition reaction of the electrolyte solution cannot be fully exhibited either.

In order to accomplish the foregoing and other objects, the present invention also provides a non-aqueous electrolyte secondary battery comprising any one of the foregoing positive electrodes, a negative electrode, and a non-aqueous electrolyte.

In order to accomplish the foregoing and other objects, the present invention also provides a method of manufacturing a positive electrode for a non-aqueous electrolyte secondary battery, comprising the steps of: preparing a positive electrode active material by using a lithium-transition metal composite oxide and an aqueous solution having dissolved therein at least one metal salt selected from the group consisting of a rare earth salt, an aluminum salt, a zinc salt, a zirconium salt, and a magnesium salt, and adhering at least one metallic compound selected from the group consisting of a rare earth compound, an aluminum compound, a zinc compound, a zirconium compound, and a magnesium compound onto a surface of the lithium-transition metal composite oxide; preparing a positive electrode mixture slurry using the positive electrode active material, a conductive agent, and a latex rubber; and coating the positive electrode mixture slurry onto at least one surface of a positive electrode current collector, and thereafter drying the positive electrode mixture slurry, to prepare a positive electrode mixture layer.

The just-described method makes it possible to directly manufacture the positive electrode mixture slurry by using the lithium-transition metal composite oxide and the aqueous solution containing dissolved therein an aluminum salt, a zinc salt, a zirconium salt, a magnesium salt, and a rare earth salt, without drying the mixture. This means that the process of manufacturing the positive electrode for a non-aqueous electrolyte secondary battery can be simplified, so the manufacturing cost of the non-aqueous electrolyte secondary battery can be reduced.

Examples of the rare earth salt include nitrate, sulfate, chloride, and acetate.

The following two techniques are examples of the technique of making a metallic compound adhere to the surface of the lithium-transition metal composite oxide by using a lithium-transition metal composite oxide and an aqueous solution having dissolved therein an aluminum salt, a zinc salt, a zirconium salt, a magnesium salt, or a rare earth salt.

(1) An aqueous solution containing dissolved therein at least one metal salt selected from an aluminum salt, a zinc salt, a zirconium salt, a magnesium salt, and a rare earth salt is added to a dispersion containing a lithium-transition metal composite oxide dispersed therein, so that an aluminum compound, a zinc compound, a zirconium compound, a magnesium compound, or a rare earth compound (generally, aluminum hydroxide, zinc hydroxide, zirconium hydroxide, magnesium hydroxide, or a rare earth hydroxide, as described above) is made to adhere to the surface of the lithium-transition metal composite oxide.

(2) While a lithium-transition metal composite oxide is being stirred, an aqueous solution containing dissolve therein at least one metal salt selected from an aluminum salt, a zinc salt, a zirconium salt, a magnesium salt, and a rare earth salt is sprayed to a lithium-transition metal composite oxide so that an aluminum compound, a zinc compound, a zirconium compound, a magnesium compound, or a rare earth compound (generally, aluminum hydroxide, zinc hydroxide, zirconium hydroxide, magnesium hydroxide, or rare earth hydroxide) is made to adhere to the surface of the lithium-transition metal composite oxide. To stir the lithium-transition metal composite oxide, it is possible to use a drum mixer, a loedige mixer, a twin-screw kneaded, or the like.

It is desirable that in the step of preparing the positive electrode mixture slurry, the conductive agent comprise a dispersion in which the conductive agent is dispersed by a thickening agent. The use of the dispersion in which the conductive agent is dispersed by a thickening agent serves to improve the dispersibility of the conductive agent.

Other Embodiments

(1) The latex rubber is not particularly limited. Examples include those using styrene, butadiene, and acrylonitrile, and more specific examples include: styrene-butadiene rubber (SBR), acrylonitrile butadiene rubber, acrylic ester-based latex, vinyl acetate-based latex, methyl methacrylate-butadiene-based latex, and carboxy-modified substances thereof; or fluorine-containing resins capable of dispersing in water, such as polytetrafluoroethylene (PTFE), tetrafluoroethylene-perfluoroalkoxy vinyl ether copolymer (PFA), tetrafluoroethylene-laexafluoropropylene copolymer (FEP), ethylene-tetrafluoroethylene copolymer (ETFE), polychlorotrifluoroethylene (PCTFE), ethylene-chlorotrifluoroethylene copolymer (ECTFE), and modified substances thereof.

(2) Examples of the positive electrode active material include lithium-containing transition metal composite oxides containing a transition metal, such as cobalt, nickel, and manganese. Specific examples include lithium cobalt oxide, lithium-containing nickel oxide, lithium-nickel-cobalt-manganese composite oxide, lithium-nickel-manganese-atuminum composite oxide, and lithium-nickel-cobalt-aluminum composite oxide. These positive electrode active materials may be used either alone or in combination.

(3) The negative electrode active material is not particularly limited as long as it is usable as a negative electrode active material for a non-aqueous electrolyte secondary battery. Examples of the negative electrode active material include: carbon materials, such as graphite and coke; tin oxide; metallic lithium; and metals capable of alloying with lithium, such as silicon, and alloys thereof.

(4) The non-aqueous electrolyte solution is not particularly limited as long as it is usable for a non-aqueous electrolyte secondary battery. Generally, examples include those containing a supporting salt and a solvent.

Examples of the supporting salt include $LiBF_4$, $LiPF_6$, $LiN(SO_2CF_3)_2$, $LiN(SO_2C_2F_5)_2$, and $LiPF_{6-x}(C_nF_{2n+1})_x$ (where $1 < x < 6$ and $n = 1$ or $2$). These may be used either alone or in combination of two or more of them. The concentration of the supporting salt is not particularly limited, but is preferably within the range of from 0.8 mol/L to 1.5 mol/L.

Preferable examples of the solvent include carbonate solvents such as ethylene carbonate, propylene carbonate, γ-butyrolactone, diethyl carbonate, ethyl methyl carbonate, dimethyl carbonate, and carbonate solvents in which part of hydrogen in the foregoing solvents is substituted by F. As the solvent, it is particularly desirable to use a mixed solvent of a cyclic carbonate and a chain carbonate.

(5) When preparing a positive electrode for a non-aqueous electrolyte secondary battery, it is common practice to use PVdF (polyvinylidene fluoride) as a binder agent. When using PVdF, PVdF is dissolved in NMP (N-methyl-2-pyrrolidone solution) because since PVDF flocculates when reacting with water. Thus, in the manufacturing process that does not involve a drying step, such as described in the present invention, the slurry flocculates when mixing the binder agent with the slurry. Therefore, PVdF cannot be used as the binder agent in the present invention.

Hereinbelow, the present invention is described in further detail. It should be construed, however, that the present invention is not limited to the following preferred embodiments but various changes and modifications are possible without departing from the scope of the invention.

*Preparation of Positive Electrode*

First, while agitating 1 kg of $LiCoO_2$ (containing 1.0 mol % of Al and 1.0 mol % Mg in solid solution) with a T.K. Hivis Mix mixer (made by Primix Corp.), an aqueous solution in which 1.69 g of erbium acetate tetrahydrate was dissolved in 100 mL of pure water was added thereto, and the mixture was kneaded. This resulted in a positive electrode active material in which an erbium compound was adhered to the surface of $LiCoO_2$. Next, the resulting positive electrode active material was stirred while adding a dispersion having dispersed therein AB (acetylene black) as a conductive agent and CMC (carboxymethylcellulose) as a thickening agent thereto. Further, methyl methacrylate-butadiene rubber as a water-based binder (made of a latex rubber) was added thereto, to thus prepare a positive electrode mixture slurry. The positive electrode mixture slurry was prepared so that the mass ratio of the positive electrode active material, the AB, the CMC, and the methyl methacrylate-butadiene rubber was 94.5 : 2.5 : 0.5 : 1.0. Next, the positive electrode mixture slurry was coated onto both sides of a positive electrode current collector made of an aluminum foil. The resultant article was then dried and rolled, whereby a positive electrode was prepared. The filling density of the positive electrode active material in this positive electrode was set at 3.60 g/cc.

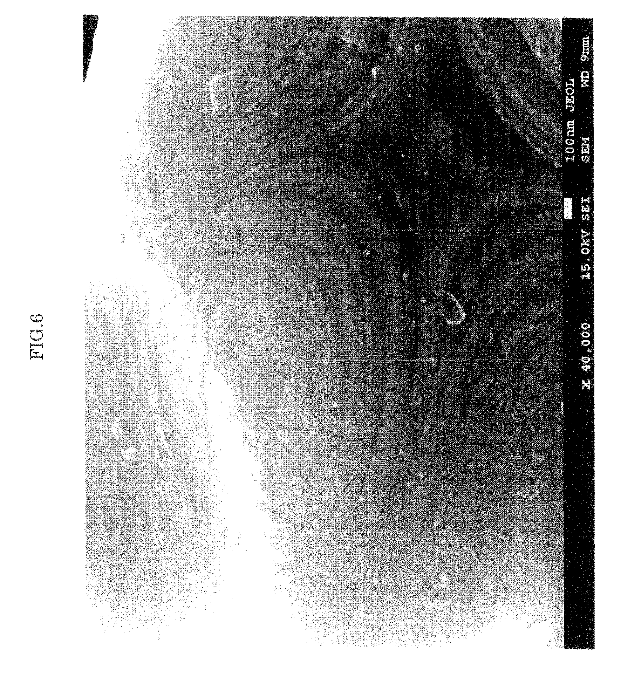

The amount of the adhering erbium compound was 0.067 mass % in terms of elemental erbium based on the mass of the lithium cobalt oxide. In addition, the resultant positive electrode active material was observed by SEM (see Fig. 6). As a result, it was found that the particle size of the erbium compound adhered to the particle surface of the lithium cobalt oxide was about 1 nm to about 100 nm, and that the particles of the erbium compound were adhered over the lithium cobalt oxide particle in a dispersed state. In Fig. 6, the flake-shaped particles with a size of about 200 nm or greater are lithium cobalt oxide particles.

*Preparation of Negative Electrode*

A carbon material (graphite), CMC, and SBR were mixed at a mass ratio of 97.5 : 1 : 1.5 in an aqueous solution to prepare a negative electrode mixture slurry. Thereafter, the negative electrode mixture slurry was coated onto both sides of a negative electrode current collector made of a copper foil, and the resultant article was then dried and rolled, whereby, a negative electrode was prepared. The filling density of the negative electrode active material was set at 1.75 g/cc.

*Preparation of Non-aqueous Electrolyte Solution*

$LiPF_6$ as a lithium salt was dissolved at a concentration of 1 mol/L into a mixed solvent of 3 : 7 volume ratio of EC (ethylene carbonate) and DEC (diethyl carbonate), and 1 volume % of VC (vinylene carbonate) was added thereto, whereby a non-aqueous electrolyte solution was prepared.

*Preparation of Electrode Assembly*

First, using one sheet of the above-described positive electrode, one sheet of the above-described negative electrode, and two sheets of separators each made of a microporous polyethylene the positive electrode and the negative electrode were disposed facing each other with the separators interposed therebetween. Thereafter, the positive electrode, the negative electrode, and the separators were spirally coiled using a winding core rod. Subsequently, the winding core rod was pulled out to prepare a spirally-wound electrode assembly, and then, the spirally-wound electrode assembly was compressed to prepare a flat-type electrode assembly.

*Preparation of Battery*

The just-described flat-type electrode assembly and the above-described electrolyte solution were put into an aluminum laminate battery case in a $CO_2$ atmosphere at 25°C and 1 atm, so that a flat-type non-aqueous electrolyte secondary battery was prepared. This battery had a design capacity of 750 mAh when charged to 4.4 V. This battery had dimensions of 3.6 mm in thickness, 35 mm in width, and 62 mm in length.

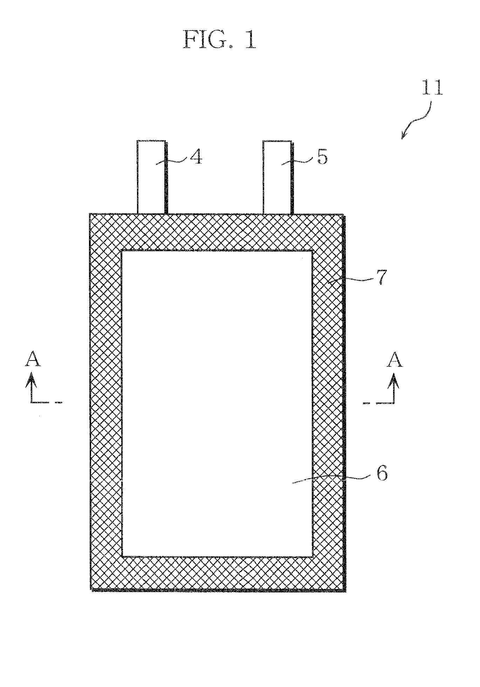

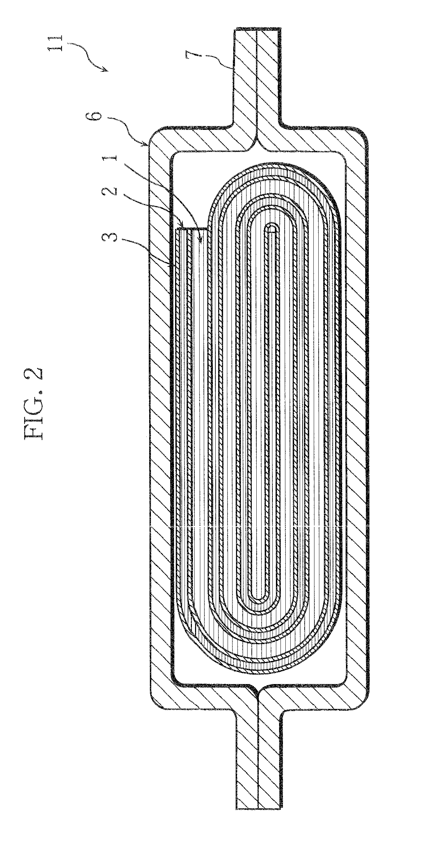

The specific structure of the non-aqueous electrolyte secondary battery 11 is as follows. As illustrated in Figs. 1 and 2, a positive electrode 1 and a negative electrode 2 are disposed so as to face each other across separators 3. A flat-type electrode assembly is constructed by the positive electrode 1, the negative electrode 2, and the separators 3, and a non-aqueous electrolyte solution is impregnated in the flat-type electrode assembly. The positive electrode 1 and the negative electrode 2 are connected to a positive electrode current collector tab 4 and a negative electrode current collector tab 5, respectively, so as to form a structure that enables charging and discharging as a secondary battery. The electrode assembly is disposed in a space within an aluminum laminate battery case 6 having a sealed part 7, at which opposing peripheral edges of the aluminum laminate films are heat sealed.

EXAMPLES

Example 1

A positive electrode and a battery were fabricated in the same manner as described in the just-described embodiment.

The battery fabricated in this manner is hereinafter referred to as Battery A1 of the invention.

Example 2

A positive electrode and a battery were fabricated in the same manner as described in Example 1 above, except that in preparing the positive electrode, an aqueous solution in which 1.72 g of ytterbium acetate tetrahydrate was dissolved in 100 mL of pure water was used in place of the aqueous solution in which erbium acetate tetrahydrate was dissolved in pure water. In the positive electrode prepared in the just-described manner, the amount of the adhering ytterbium compound was 0.069 mass % in terms of elemental ytterbium based on the mass of the lithium cobalt oxide. (Note that the number of moles of the adhering ytterbium is the same as that of the erbium in Example 1.) The particle size of the ytterbium compound adhered to the surface of the lithium cobalt oxide particle was from about 1 nm to about 100 nm. The particles of the ytterbium compound were adhered over the lithium cobalt oxide particle in a dispersed state, as in Example 1.

The battery fabricated in this manner is hereinafter referred to as Battery A2 of the invention.

Example 3

A positive electrode and a battery were fabricated in the same manner as described in Example 1 above, except that in preparing the positive electrode, an aqueous solution in which 1.39g of neodymium acetate monohydrate was dissolved in 100 mL of pure water was used in place of the aqueous solution in which erbium acetate tetrahydrate was dissolved in pure water. In the positive electrode prepared in the just-described manner, the amount of the adhering neodymium compound was 0.058 mass % in terms of elemental neodymium based on the mass of the lithium cobalt oxide. (Note that the number of moles of the adhering neodynium is the same as that of the erbium in Example 1.) The particle size of the neodymium compound adhered to the surface of the lithium cobalt oxide particle was from about 1 nm to about 100 nm. The particles of the neodymium compound were adhered over the lithium cobalt oxide particle in a dispersed state, as in Example 1.

The battery fabricated in this manner is hereinafter referred to as Battery A3 of the invention.

Example 4

A positive electrode and a battery were fabricated in the same manner as described in Example 1 above, except that in preparing the positive electrode, an aqueous solution in which 1.40 g of lanthanum acetate 1.5 hydrate was dissolved in 100 mL of pure water was used in place of the aqueous solution in which erbium acetate tetrahydrate was dissolved in pure water. In the positive electrode prepared in the just-described manner, the amount of the adhering lanthanum compound was 0.056 mass % in terms of elemental lanthanum based on the mass of the lithium cobalt oxide. (Note that the number of moles of the adhering lanthanum is the same as that of the erbium in Example 1.) The particle size of the lanthanum compound adhered to the surface of the lithium cobalt oxide particle was from about 1 nm to about 100 nm. The particles of the lanthanum compound were adhered over the lithium cobalt oxide particle in a dispersed state, as in Examples 1.

The battery fabricated in this manner is hereinafter referred to as Battery A4 of the invention.

Example 5

A positive electrode and a battery were fabricated in the same manner as described in Example 1 above, except that in preparing the positive electrode, an aqueous solution in which 1.53 g of yttrium acetate pentahydrate was dissolved in 100 mL of pure water was used in place of the aqueous solution in which erbium acetate tetrahydrate was dissolved in pure water. In the positive electrode prepared in the just-described manner, the amount of the adhering yttrium compound was 0.036 mass % in terms of elemental yttrium based on the mass of the lithium cobalt oxide. (Note that the number of moles of the adhering yttrium is the same as that of the erbium in Example 1.) The particle size of the yttrium compound adhered to the surface of the lithium cobalt oxide particle was from about 1 nm to about 100 nm. The particles of the yttrium compound were adhered over the lithium cobalt oxide particle in a dispersed state, as in Example 1.

The battery fabricated in this manner is hereinafter referred to as Battery A5 of the invention.

Example 6

A positive electrode and a battery were fabricated in the same manner as described in Example 1 above, except that in preparing the positive electrode, an aqueous solution in which 1.63 g of samarium acetate tetrahydrate was dissolved in 100 mL of pure water was used in place of the aqueous solution in which erbium acetate tetrahydrate was dissolved in pure water. In the positive electrode prepared in the jut-described manner, the amount of the adhering samarium compound was 0.060 mass % in terms of elemental samarium based on the mass of the lithium cobalt oxide. (Note that the number of moles of the adhering samarium is the same as that of the erbium in Example 1.) The particle size of the samarium compound adhered to the surface of the lithium cobalt oxide particle was from about 1 nm to about 100 nm. The particles of the samarium compound were adhered over the lithium cobalt oxide particle in a dispersed state, as in Example 1.

The battery fabricated in this manner is hereinafter referred to as Battery A6 of the invention.

Example 7

A positive electrode and a battery were fabricated in the same manner as described in Example 1 above, except that in preparing the positive electrode, an aqueous solution in which 1.81 g of erbium nitrate pentahydrate was dissolved in 100 mL of pure water was used in place of the aqueous solution in which erbium acetate tetrahydrate was dissolved in pure water. In the positive electrode prepared in the just-described manner, the amount of the adhering erbium compound was 0.067 mass % in terms of elemental erbium based on the mass of the lithium cobalt oxide. (Note that the number of moles of the adhering erbium is the same as that of the erbium in Example 1.) The particle size of the erbium compound adhered to the surface of the lithium cobalt oxide particle was from about 1 nm to about 100 nm. The particles of the erbium compound were adhered over the lithium cobalt oxide particle in a dispersed state, as in Example 1.

The battery fabricated in this manner is hereinafter referred to as Battery A7 of the invention.

Example 8

A positive electrode and a battery were fabricated in the same manner as described in Example 1 above, except that in preparing the positive electrode, the positive electrode mixture slurry was dried at 120°C for 3 yours after adding the aqueous solution in which 1.69 g of erbium acetate tetrahydrate was dissolved in 100 mL of pure water to $LiCoO_2$ and kneading the mixture. In the positive electrode prepared in the just-described manner, the amount of the adhering erbium compound was 0.067 mass % in terms of elemental erbium based on the mass of the lithium cobalt oxide. (Note that the number of moles of the adhering erbium is the same as that of the erbium in Example 1.) The particle size of the erbium compound adhered to the surface of the lithium cobalt oxide particle was from about 1 nm to about 100 nm. The particles of the erbium compound were adhered over the lithium cobalt oxide particle in a dispersed state, as in Example 1.

The battery fabricated in this manner is hereinafter referred to as Battery A8 of the invention.

Example 9

A positive electrode and a battery were fabricated in the same manner as described in Example 1 above, except that in preparing the positive electrode, an aqueous solution in which 1.53 g of aluminum nitrate nonahydrate was dissolved in 100 mL of pure water was used in place of the aqueous solution in which erbium acetate tetrahydrate was dissolved in pure water. In the positive electrode prepared in the just-described manner, the amount of the adhering aluminum compound was 0.011 mass % in terms of elemental aluminum based on the mass of the lithium cobalt oxide. (Note that the number of moles of the adhering aluminum is the same as that of the erbium in Example 1.) The particle size of the aluminum compound adhered to the surface of the lithium cobalt oxide particle was from about 1 nm to about 100 nm. The particles of the aluminum compound were adhered over the lithium cobalt oxide particle in a dispersed state, as in Example 1.

The battery fabricated in this manner is hereinafter referred to as Battery A9 of the invention.

Example 10

A positive electrode and a battery were fabricated in the same manner as described in Example 1 above, except that in preparing the positive electrode, an aqueous solution in which 0.92 g of zirconium oxyacetate was dissolved in 100 mL of pure water was used in place of the aqueous solution in which erbium acetate tetrahydrate was dissolved in pure water. In the positive electrode prepared in the just-described manner, the amount of the adhering zirconium compound was 0.037 mass % in terms of elemental zirconium based on the mass of the lithium cobalt oxide. (Note that the number of moles of the adhering zirconium is the same as that of the erbium in Example 1.) The particle size of the zirconium compound adhered to the surface of the lithium cobalt oxide particle was from about 1 nm to about 100 nm. The particles of the zirconium compound were adhered over the lithium cobalt oxide particle in a dispersed state, as in Example 1.

The battery fabricated in this manner is hereinafter referred to as Battery A10 of the invention.

Example 11

A positive electrode and a battery were fabricated in the same manner as described in Example 1 above, except that in preparing the positive electrode, an aqueous solution in which 0.90 g of zinc acetate dihydrate was dissolved in 100 mL of pure water was used in place of the aqueous solution in which erbium acetate tetrahydrate was dissolved in pure water. In the positive electrode prepared in the just-described manner, the amount of the adhering zinc compound was 0.027 mass % in terms of elemental zinc based on the mass of the lithium cobalt oxide. (Note that the number of moles of the adhering zinc is the same as that of the erbium in Example 1.) The particle size of the zinc compound adhered to the surface of the lithium cobalt oxide particle was from about 1 nm to about 100 nm. The particles of the zinc compound were adhered over the lithium cobalt oxide particle in a dispersed state, as in Example 1.

The battery fabricated in this manner is hereinafter referred to as Battery A11 of the invention.

Example_12

A positive electrode and a battery were fabricated in the same manner as described in Example 1 above, except that in preparing the positive electrode, an aqueous solution in which 1.05 g of magnesium nitrate hexahydrate was dissolved in 100 mL of pure water was used in place of the aqueous solution in which erbium acetate tetrahydrate was dissolved in pure water. In the positive electrode prepared in this manner, the amount of the adhering magnesium compound was 0.01 mass % in terms of elemental magnesium based on the mass of the lithium cobalt oxide. (Note that the number of moles of the adhering magnesium is the same as that of the erbium in Example 1.) The particle size of the magnesium compound adhered to the surface of the lithium cobalt oxide particle was from about 1 nm to about 100 nm. The particles of the magnesium compound were adhered over the lithium cobalt oxide particle in a dispersed state, as in Example 1.

The battery fabricated in this manner is hereinafter referred to as Battery A12 of the invention.

Example 13

A positive electrode and a battery were fabricated in the same manner as described in Example 1 above, except that PTFE (polytetrafluoroethylene) was used as the latex rubber, in place of the methyl methacrylate-butadiene rubber, when preparing the positive electrode mixture slurry.

The battery fabricated in this manner is hereinafter referred to as Battery A13 of the invention.

Example 14

A positive electrode and a battery were prepared in the same manner as described in Example 1 above, except that $LiNi_{0.5}Co_{0.2}Mn_{0.3}O_2$ was used as the positive electrode active material in place of $LiCoO_2$ (containing 1.0 mol % of Al and 1.0 mol % Mg in solid solution). The amount of the adhering erbium compound was 0.067 mass % in terms of elemental erbium based on the mass of the $LiNi_{0.5}Co_{0.2}Mn_{0.3}O_2$. The particle size of the erbium compound adhered to the surface of the lithium cobalt oxide particle was from about 1 nm to about 100 nm. The particles of the erbium compound were adhered over the $LiNi_{0.5}Co_{0.2}Mn_{0.3}O_2$ particle in a dispersed state, as in Example 1.

The battery fabricated in this manner is hereinafter referred to as Battery A14 of the invention.

Examples 15

A positive electrode and a battery were prepared in the same manner as described in Example 1 above, except that a 1 : mass ratio mixture of $LiCoO_2$ (containing 1.0 mol% of Al and 1.0 mol% of Mg in solid solution) and $LiNi_{0.33}Co_{0.33}Mn_{0.33}O_2$ was used as the positive electrode active material in place of $LiCoO_2$ (containing 1.0 mol % of Al and 1.0 mol % Mg in solid solution). The amount of the adhering erbium compound was 0.067 mass % in terms of elemental erbium based on the mass of the mixture of $LiCoO_2$ and $LiNi_{0.33}Co_{0.33}Mn_{0.33}O_2$. The particle size of the erbium compound adhered to each of the particle surfaces of the $LiCoO_2$ and the $LiNi_{0.33}Co_{0.33}Mn_{0.33}O_2$ was from about 1 nm to about 100 nm. The particles of the erbium compound were adhered over the $LiCoO_2$ particle and the $LiNi_{0.33}Co_{0.33}Mn_{0.33}O_2$ particle in a dispersed state, as in Example 1.

The battery fabricated in this manner is hereinafter referred to as Battery A15 of the invention.

Comparative Example 1

A positive electrode and a battery were fabricated in the same manner as described in Example 1 above, except that in preparing the positive electrode, 100 mL of pure water alone was used in place of the aqueous solution in which erbium acetate tetrahydrate was dissolved in pure water.

The battery fabricated in this manner is hereinafter referred to as Comparative Battery Z1.

Comparative Example.2

A positive electrode and a battery were fabricated in the same manner as described in Comparative Examples 1 above, except that PTFE (polytetrafluoroethylene) was used as the latex rubber, in place of the methyl methacrylate-butadiene rubber, when preparing the positive electrode mixture slurry.

The battery fabricated in this manner is hereinafter referred to as Comparative Battery Z2.

Comparative Example_3

A positive electrode and a battery were prepared in the same manner as described in Comparative Example 1 above, except that $LiNi_{0.5}Co_{0.2}Mn_{0.3}O2$ was used as the positive electrode active material in place of LiCoO2 (containing 1.0 mol % of Al and 1.0 mol % Mg in solid solution).
The battery fabricated in this manner is hereinafter referred to as Comparative Battery Z3.

Comparative Example 4

A positive electrode and a battery were prepared in the same manner as described in Comparative Example 1 above, except that a 1 : 1 mass ratio mixture of $LiCoO_2$ (containing 1.0 mol% of Al and 1.0 mol% of Mg in solid solution) and $LiNi_{0.33}Co_{0.33}Mn_{0.33}O_2$ was used as the positive electrode active material in place of $LiCoO_2$ (containing 1.0 mol % of Al and 1.0 mol % Mg in solid solution).
The battery fabricated in this manner is hereinafter referred to as Comparative
Battery Z4.

Experiment 1

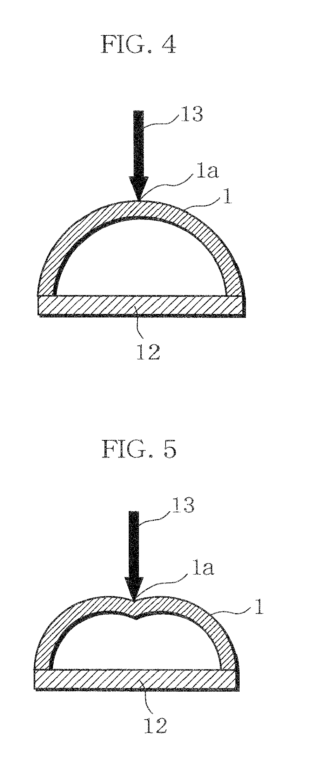

The flexibility of each of the positive electrodes used in Batteries A1 to A8 of the invention and Comparative Battery Z1 was determined in the following manner. The results are shown in Table 1 below.
First, a positive electrode was cut out into a size of width 5 0mm $\times$ length 20 mm, and as illustrated in Fig. 4, both ends of the cut-out positive electrode 1 were bonded to an end of an acrylic place 12 having a width of 30 mm using a double-sided tape.
Next, using a force gauge (FGP-0.5 made by Nidec-Shimpo Corp.), a central portion 1a of the positive electrode 1 was pressed with a pressing force 13. The speed of the pressing was a constant speed of 20 mm/min.
Fig. 5 is a schematic cross-sectional view illustrating the positive electrode 1 in which a dent is formed by a pressing force 13 at its central portion 1a. The load obtained immediately before such a dent was formed was defined as the maximum value of the load.

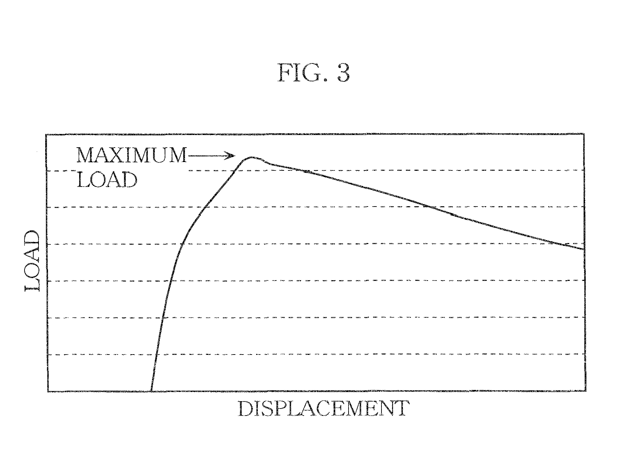

Fig. 3 is a graph illustrating the relationship between the load applied to the positive electrode and the displacement. As illustrated in Fig. 3, the maximum value of the load was obtained as the maximum load. The maximum loads obtained for the respective positive electrodes are shown in Table 1, and each of the maximum load values indicates the flexibility of each of the positive electrodes. Table I shows that the smaller the value is, the greater the flexibility is.

Experiment 2

Each of Batteries A1 through A8 of the invention as well as Comparative Battery Z1 was charged and discharged under the following conditions, and the high-temperature continuous charge capability (residual capacity ratio) was determined using the following equation (1). The results are shown in Table 1 below.

*Determination of Residual Capacity Ratio*

$$\text{Residual capacity ratio (\%)} = (\text{Discharge capacity obtained at the first-time}$$
$$\text{discharge after the continuous charging test/Discharge capacity obtained before the}$$
$$\text{continuous charging test}) \times 100 \qquad \qquad ...(1)$$

*Charge-discharge Conditions*

- Charge-discharge Conditions for the First Cycle

Each of the batteries was charged at a constant current of 1.0 It (750 mA) to a battery voltage of 4.4 V and thereafter further charged at a constant voltage of 4.4 V to a current of It/20 (37.5 mA). Then, 10 minutes later the completion of the charging, each of the batteries was discharged at a constant current of 1.0 It (750 mA) until the battery voltage reached 2.75 V, and the discharge capacity before the continuous charging test was determined.

- Various Conditions during High-temperature Continuous Charging and Discharge Conditions after the High-temperature Continuous Charging

First, each of the batteries was set aside in a thermostatic chamber at 60°C for 1 hour. Next, while keeping the environment at 60°C, each of the batteries was charged at a constant current of 1.0 It (750 mA) to a battery voltage of 4.4 V and thereafter further charged at a constant voltage of 4.4 V. The total charging time at 60°C was set at 72 hours, and after the time elapsed, each of the batteries was removed from the thermostatic chamber at 60°C. Then, after each of the batteries was cooled to room temperature, each of the batteries was discharged at a constant current of 1.0 It (750 mA) until the battery voltage reached 2.75 V, and the discharge capacity at the first-time discharge after the continuous charging test was obtained.

TABLE 1

| Battery | Additive compound | Metal component of the compound | Drying in preparing slurry | Latex rubber | Flexibility (Nm) | Residual capacity ratio (%) |
|---|---|---|---|---|---|---|
| A1 | Acetate compound | Erbium | No | Methyl methacrylate-butadiene rubber | 86 | 70.5 |
| A2 | | Ytterbium | | | 72 | 70.1 |
| A3 | | Neodymium | | | 87 | 71.9 |
| A4 | | Lanthanum | | | 85 | 70.3 |
| A5 | | Yttrium | | | 83 | 71.6 |
| A6 | | Samarium | | | 85 | 70.5 |
| A7 | Nitrate compound | Erbium | | | 86 | 69.5 |
| A8 | Acetate compound | erbium | Yes | | 96 | 71.4 |
| Z1 | Not added | - | No | | 139 | 57.4 |

As is clear from the results shown in Table 1, all of Batteries A1 to A8 of the invention, each having a positive electrode in which a rare earth compound is adhered to the lithium cobalt oxide surface, exhibited a flexibility of less than 100 Nm. In contrast, Comparative Battery Z1, having a positive electrode in which no rare earth compound is adhered to the lithium cobalt oxide surface, showed a flexibility of 139 Nm. This demonstrates that the positive electrodes of Batteries A1 through A8 of the invention offer significant improvements in flexibility of the electrode plate over the positive electrode of Comparative Battery Z1. Moreover, all of Batteries A1 through A8 of the invention exhibited a residual capacity ratio of 69.5% or higher. In contrast, Comparative Battery Z1 showed a residual capacity ratio of 57.4%. Therefore, Batteries A1 through A8 of the invention are superior in high-temperature continuous charge capability to Comparative Battery Z1. Thus, it is understood that a lithium cobalt oxide having a rare earth compound adhered to the surface thereof should be used as the positive electrode active material.

It should be noted, however, that although both of Battery A1 of the invention and Battery A8 of the invention use erbium, the positive electrode of Battery A8 of the invention shows a less flexibility than that of Battery A1 of the invention (but shows almost the same high-temperature continuous charge capability). This indicates that, in preparing the positive electrode mixture slurry, it is desirable to directly proceed to the process step of adding a conductive agent without providing a drying process step. Because the drying step is unnecessary, it is possible to simplify the manufacturing process of the positive electrode and to achieve industrial advantages such as manufacturing cost reduction.

Additionally, a positive electrode was prepared in the same manner as described in Example 1 above, except that in preparing the positive electrode, PVdF [the solvent used was a NMP (N-methyl-2-pyrrolidone) solution] was used as the binder agent in place of the latex rubber, and that the mixture was prepared so that the mass ratio of $LiCoO_2$, AB, and PVdF became 95 : 2.5 : 2.5, and the flexibility of the resulting positive electrode was determined in the foregoing manner. As a result, it was confirmed that the resulting positive electrode showed a flexibility of 146 Nm, almost as low as the positive electrode of Comparative Battery Z1.

It should be noted that the rare earth elements are not limited to erbium and the like as described above. Other rare earth elements such as scandium and cerium may also achieve the same advantageous effects.

Experiment 3

The flexibility of each of the positive electrodes used in Batteries A9 to A12 of the invention was determined in the same manner as described in Experiment 1 above. The results are shown in Table 2 below. Table 2 also shows the flexibility for each of
Batteries A1 and of the invention and Comparative Battery Z1.

Experiment_4

Each of Batteries A1 and A8 through A12 of the invention as well as Comparative Battery Z1 was charged and discharged under the following conditions, and the cycle performance at high-rate discharge (capacity retention ratio) was determined using the following equation (2). The results are shown in Table 2 below.

*Determination of Capacity Retention Ratio*

$$\text{Capacity retention ratio (\%)} = (\text{Discharge capacity at the 250th cycle})/(\text{Discharge capacity at the first cycle}) \times 100 \quad \ldots (2)$$

*Charge-discharge Conditions*

- Charge conditions

Each of the batteries was charged at a constant current of 1.0 It (750 mA) to a battery voltage of 4.4 V and thereafter further charged at a constant voltage of 4.4 V to a current of It/20 (37.5mA).

- Discharge conditions

Each of the batteries was discharged at a constant current of 2.671 It (2000 mA) until the battery voltage reached 2.75 V.

- Rest

The rest time between the charge test and the discharge test was 10 minutes.
The cycle performance was evaluated by repeating 250 times the cycle of the charging, the rest, the discharging, and the rest. The temperature during the cycle performance test was 25°C ±5°C.

TABLE 2

| Battery | Additive compound | Metal component of the compound | Drying in preparing slurry | Latex rubber | Flexibility (Nm) | Capacity retention ratio after the 250th cycle (%) |
|---|---|---|---|---|---|---|
| A1 | Acetate compound | Erbium | No | Methyl methacrylate-butadiene rubber | 86 | 85 |
| A8 | | | Yes | | 96 | 85 |
| A9 | Nitrate compound | Aluminum | No | | 102 | 82 |
| A10 | Oxyacetate compound | zirconium | | | 106 | 82 |
| A11 | Acetate compound | Zinc | | | 100 | 80 |
| A12 | Nitrate compoun | Magnesium | | | 101 | 81 |
| Z1 | Not added | - | | | 139 | 75 |

As is clear from the results shown in Table 2, all of Batteries A1 and A8 to A12 of the invention, each having a positive electrode in which an erbium compound, an aluminum compound, a zinc compound, a zirconium compound, or a magnesium compound is adhered to the lithium cobalt oxide surface, exhibited a capacity retention ratio after the 250 cycle of 80% or higher. In contrast, Comparative Battery Z1, having a positive electrode in which no rare earth compound is adhered to the lithium cobalt oxide surface, showed a lower capacity retention ratio after the 250 cycle, 75%.

When Batteries A1 and A8 through A12 of the invention are compared to each other, it is observed that Batteries A1 and A8 of the invention, each having a positive electrode containing an erbium compound adhered to the surface, exhibit higher capacity retention ratios after the 250th cycle than Batteries A9 through A12 of the invention, each having a positive electrode containing an aluminum compound or the like adhered to the surface. This demonstrates that, from the viewpoint of improving the cycle performance, it is desirable that a rare earth compound such as an erbium compound be adhered to the lithium cobalt oxide surface.

Moreover, all of Batteries A1 and A8 through A12 of the invention exhibited a flexibility of 106 Nm or less. In contrast, Comparative Battery Z1, having a positive electrode in which no rare earth compound is adhered to the lithium cobalt oxide surface, showed a flexibility of 139 Nm. This demonstrates that the positive electrodes of Batteries A1 and A8 through A12 of the invention offer significant improvements in flexibility of the electrode plate over the positive electrode of Comparative Battery Z1.

Furthermore, when Batteries A1 and A8 through A12 of the invention are compared to each other, it is observed that Batteries A1 and A8 of the invention, each having a positive electrode containing an erbium compound adhered to the surface, exhibit better flexibility than Batteries A9 through A12 of the invention, each having a positive electrode containing an aluminum compound or the like adhered to the surface. This demonstrates that, from the viewpoint of improving the flexibility as well, it is desirable that a rare earth compound such as an erbium compound be adhered to the lithium cobalt oxide surface.

Experiment 5

The flexibility of each of the positive electrodes used in Batteries A13 through A1 5 of the invention and Comparative Batteries Z2 through Z4 was determined in the same manner as described in Experiment 1 above. The results are shown in Table 3 below. Table 3 also shows the flexibility for each of Battery A1 of the invention and Comparative Battery Z1.

TABLE 3

| Battery | Positive electrode active material | Additive compound | Metal component of the compound | Drying in preparing slurry | Latex rubber | Flexibility (Nm) |
|---|---|---|---|---|---|---|
| A1 | LiCoO$_2$ LiCoO$_2$ | Acetate compound | Erbium | No | Methyl methacrylate-butadiene rubber | 86 |
| A13 | | | | | PTFE | 75 |
| A14 | LiNi$_{0.5}$Co$_{0.2}$ Mn$_{0.3}$O$_2$ | | | | Methyl methacrylate- | 96 |
| A15 | LiCoO$_2$/ LiNi$_{0.33}$Co$_{0.33}$Mn$_{0.33}$O$_2$ | | | | butadiene rubber | 100 |
| Z1 | LiCoO$_2$ LiCoO$_2$ | Not added | — | | Methyl methacrytate-butadiene rubber | 139 |
| Z2 | | | | | PTFE | 110 |
| Z3 | LiNi$_{0.5}$Co$_{0.2}$ Mn$_{0.3}$O$_2$ | | | | Methyl methacrylate-butadiene rubber | 121 |
| Z4 | LiCoO$_2$ /LiNi$_{0.33}$Co$_{0.33}$Mn$_{0.33}$O$_2$ | | | | | 117 |

As clearly seen from the results shown in Table 3, it is observed that when comparing Battery A13 of the invention and Comparative Battery Z2 to each other, both of which use PTFE as the binder, Battery A13 of the invention 3 exhibits an improvement in flexibility over Comparative Battery Z2. This demonstrates that it is effective to make a rare earth compound such as an erbium compound be adhered to the positive electrode active material surface also when a fluorine-containing resin such as PTFE is used as the binder. Furthermore, it is observed that Battery A13 of the invention exhibits higher flexibility than Battery A1 of the invention. Therefore, it is found more desirable to use fluorine-containing resin such as PTFE as the latex rubber.

In addition, it is observed that when comparing Battery A14 of the invention and Comparative Battery 23 to each other, each of which uses LiNi$_{0.5}$Co$_{0.2}$Mn$_{0.3}$O$_2$ as the positive electrode active material and when comparing Battery A15 of the invention and Comparative Battery Z4 to each other, each of which uses a mixture of LiCoO$_2$ and LiNi$_{0.33}$Co$_{0.33}$Mn$_{0.33}$O$_2$ as the positive electrode active material, Batteries A14 and A15 of the invention exhibit improvements in flexibility over Comparative Batteries Z3 and Z4. This demonstrates that it is effective to make a rare earth compound such as an erbium compound be adhered to the positive electrode active material surface also when LiNi$_{0.5}$Co$_{0.2}$Mn$_{0.3}$O$_2$ or a mixture of LiCoO$_2$ and LiNi$_{0.33}$Co$_{0.33}$Mn$_{0.33}$O$_2$ is used as the positive electrode. It should be noted that the effect of improvement in flexibility is more significant when using LiCoO$_2$ as the positive electrode active material than when using LiNi$_{0.5}$Co$_{0.2}$Mn$_{0.3}$O$_2$ and when using a mixture of LiCoO$_2$ and LiNi$_{0.33}$Co$_{0.33}$Mn$_{0.33}$O$_2$ (i.e., the effect of improving the flexibility obtained by Battery A1 of the invention over Comparative Battery Z1 is more significant than the effect of improving the flexibility obtained by Batteries A14 and A15 of the invention over Comparative Batteries Z3 and Z4). Although the reason is not fully understood, this is believed to be due to the differences in, for example, particle size, surface area, shape, and alkaline component of the positive electrode active materials.

The present invention is expected to be applicable to the power sources for mobile information terminals such as mobile telephones, notebook computers, and PDAs, as well as the power sources for the applications that require high power, such as HEVs and power tools.

While detailed embodiments have been used to illustrate the present invention, to those skilled in the art, however, it will be apparent from the foregoing disclosure that various changes and modifications can be made therein without departing from the spirit and scope of the invention. Furthermore, the foregoing description of the embodiments according to the present invention is provided for illustration only, and is not intended to limit the invention.

**Claims**

1. A positive electrode for a non-aqueous electrolyte secondary battery comprising:

   a. positive electrode current collector;
   a positive electrode mixture layer formed on at least one surface of the positive electrode current collector, the positive electrode mixture layer containing a positive electrode active material, a water-based binder, and a conductive agent;
   the positive electrode active material comprising a lithium-transition metal composite oxide having at least one metallic compound selected from the group consisting of an aluminum compound, a zinc compound, a zirconium compound, a magnesium compound, and a rare earth compound, the at least one metallic compound adhered to a surface of the lithium-transition metal composite oxide; and
   the water-based binder comprising a latex rubber.

2. The positive electrode for a non-aqueous electrolyte secondary battery according to claim 1, wherein the latex rubber contains a fluorine-containing resin.

3. The positive electrode for a non-aqueous electrolyte secondary battery according to claim 2, wherein the fluorine-containing resin is PTFE.

4. The positive electrode for a non-aqueous electrolyte secondary battery according to any one of claims 1 through 3, wherein the at least one metallic compound is a rare earth compound.

5. The positive electrode for a non-aqueous electrolyte secondary battery according to claim 4, wherein the rare earth compound is at least one compound selected from the group consisting of an yttrium compound, a lanthanum compound, a neodymium compound, a samarium compound, an erbium compound, and an ytterbium compound.

6. The positive electrode four a non-aqueous electrolyte secondary battery according to any one of claims 1 through 5, wherein the at least one metallic compound selected from the group consisting of an aluminum compound, a zinc compound, a zirconium compound, a magnesium compound, and a rare earth compound is at least one substance selected from the group consisting of a hydroxide, an oxyhydroxide, an acetate compound, a nitrate compound, and a sulfate compound.

7. The positive electrode for a non-aqueous electrolyte secondary battery according to claim 6, wherein the at least one metallic compound selected from the group consisting of an aluminum compound, a zinc compound, a zirconium compound, a magnesium compound, and a rare earth compound comprises a hydroxide.

8. The positive electrode for a non-aqueous electrolyte secondary battery according to any one of claims 1 through 7, wherein the metallic compound existing on the surface of the lithium-transition metal composite oxide has an average particle size of from 1 nm to 100 nm.

9. A non-aqueous electrolyte secondary battery comprising a positive electrode according to any one of claims 1 through 8, a negative electrode, and a non-aqueous electrolyte.

10. A method of manufacturing a positive electrode for a noun-aqueous electrolyte secondary battery, comprising the steps of:

    preparing a positive electrode active material by using a lithium-transition metal composite oxide and an aqueous solution having dissolved therein at least one metal salt selected from the group consisting of a rare earth salt, an aluminum salt, a zinc salt, a zirconium salt, and a magnesium salt, and adhering at least one metallic compound selected from the group consisting of a rare earth compound, an aluminum compound, a zinc compound, a zirconium compound, and a magnesium compound onto a surface of the lithium-transition metal composite oxide;
    preparing a positive electrode mixture slurry using the positive electrode active material, a conductive agent, and a latex rubber; and
    coating the positive electrode mixture slurry onto at least one surface of a positive electrode current collector, and thereafter drying the positive electrode mixture slurry, to prepare a positive electrode mixture layer.

**11.** The method according to claim 10, wherein, in the step of preparing the positive electrode mixture slurry, the conductive agent comprises a dispersion in which the conductive agent is dispersed by a thickening agent.

FIG. 1

FIG. 2

FIG. 3

FIG. 4

FIG. 5

FIG.6

**EP 2 426 761 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006185887 A
- JP 2008235157 A
- JP 2009081072 A